# EUROPÄISCHE PATENTSCHRIFT

(11) **EP 2 349 836 B1**
(45) Veröffentlichungstag und Bekanntmachung des Hinweises auf die Patenterteilung: **16.01.2019**
(21) Anmeldenummer: 09737359.1
(22) Anmeldetag: 14.10.2009
(51) Int. Cl.: B64D 11/06

(54) **SITZ FÜR EIN VERKEHRSMITTEL**
SEAT FOR A MEANS OF TRANSPORTATION
SIÈGE POUR MOYEN DE TRANSPORT

(30) Priorität: 14.10.2008 DE 102008051603
(43) Veröffentlichungstag der Anmeldung: 03.08.2011
(73) Patentinhaber: Lufthansa Technik AG, 22335 Hamburg (DE)
(72) Erfinder: MERENSKY, Harald, 22359 Hamburg (DE)
(74) Vertreter: Glawe, Delfs, Moll
(86) Internationale Anmeldenummer: PCT/EP2009/007380
(87) Internationale Veröffentlichungsnummer: WO 2010/043390

(56) Entgegenhaltungen:
- EP-A2- 0 099 095
- JP-A- 57 147 931
- US-A- 4 966 413
- US-A1- 2005 029 846

## Beschreibung

Die Erfindung betrifft einen Sitz für ein Verkehrsmittel, mit einer Sitzfläche, einer Rückenlehne und einer im Bereich vor der Sitzfläche angeordneten verstellbaren Beinauflage beziehungsweise Fußstütze , die in Längsrichtung geteilt ausgebildet ist, wobei die beiden Teile separat verstellbar ausgebildet sind. Gegenstand der Erfindung ist ferner eine Anordnung von mehreren hintereinander angeordneten erfindungsgemäßen Sitzen.

In auf Langstrecken eingesetzten kommerziellen Verkehrsflugzeugen ist der Komfort in der First und Business Class in den letzten Jahren fortlaufend verbessert worden. War zum Beispiel vor einigen Jahren in der Business Class ein gängiger Sitzabstand noch 1,27 m, ist er inzwischen auf 1,60 m oder mehr gewachsen. Hingegen steht in der Economy Class bessere Raumausnutzung im Vordergrund, so dass Sitzabstände im gleichen Zeitraum eher geschrumpft sind. Ein gängiger Sitzabstand in der Economy Class von Langstreckenflugzeugen liegt beispielsweise häufig bei etwa 81 cm. Bei einigen Fluggesellschaften hat sich zwischen Business und Economy Class noch eine vierte Klasse etabliert, die häufig als Premium Economy bezeichnet wird und beispielsweise Sitzabstände zwischen etwa 90 und 110 cm aufweisen kann.

US A 4,966,413, US A 2005/029846, EP A 0 099 095 und JP 57147931 offenbaren Sitze der eingangs genannten Art. Gemeinsam ist diesen Sitzen, dass hier eine zusätzliche Beinauflage verbunden ist mit der Vorderkante der Sitzfläche.

Der Erfindung liegt die Aufgabe zugrunde, einen Sitz sowie eine Sitzanordnung der eingangsgenannten Art zu schaffen, der beziehungsweise die einen verbesserten Sitzkomfort auch bei geringeren Sitzabständen, wie sie beispielsweise in der Economy oder Premium Economy Class von Langstreckenflugzeugen üblich sind, zu ermöglichen.

Die Erfindung löst diese Aufgabe dadurch, dass die Beinauflage bzw. Fußstütze im vorderen Bereich der Sitzstruktur schwenkbar angelenkt ist, ohne mit der Sitzfläche kinematisch gekoppelt zu sein, so dass Sitzfläche und Beinauflage bzw. Fußstütze unabhängig voneinander verstellbar sind. Zunächst seien einige im Rahmen der Erfindung verwendeten Begriffe erläutert. Die Erfindung betrifft einen Sitz für ein Verkehrsmittel. Bei dem Verkehrsmittel kann es sich insbesondere um ein öffentliches Verkehrsmittel wie beispielsweise ein Flugzeug, schienengebundenes Fahrzeug oder Bus handeln. Im Bereich vor der Sitzfläche ist eine verstellbare Beinauflage beziehungsweise Fußstütze angeordnet. Richtungsangaben wie beispielsweise "vor" beziehen sich im Rahmen dieser Beschreibung und Patentansprüche auf die Blickrichtung eines bestimmungsgemäß im Sitz sitzenden Passagiers. Dementsprechend bedeutet die Teilung der Beinauflage beziehungsweise Fußstütze in Längsrichtung, dass die Teilung in der Blickrichtung eines solchen Passagiers verläuft. Der Begriff Beinauflage beziehungsweise Fußstütze bezeichnet eine vor der Sitzfläche angeordnete Einrichtung, die der Abstützung der Beine (beispielsweise der Unterschenkel) oder - abhängig von der eingenommenen Position wie unten noch näher zu erläutern - auch der Füße dienen kann. Die Beinauflage beziehungsweise Fußstütze weist somit durch die Teilung in Längsrichtung zwei Teile beziehungsweise Hälften auf, die separat verstellbar ausgebildet sind. Die Verstellbarkeit umfasst erfindungsgemäß bevorzugt insbesondere eine Höhen- und/oder Neigungsverstellbarkeit der Auflagefläche. Separat verstellbar bedeutet, dass die beiden Teile unabhängig voneinander in eine gewünschte Position zur Unterstützung des jeweiligen Beins beziehungsweise Fußes gebracht werden können. So kann, wie in der Figurenbeschreibung noch näher erläutert werden wird, beispielsweise eine Hälfte als Verlängerung der Sitzfläche nach vorne eingestellt werden um so einem angewinkelten Bein als Fußstütze dienen während die andere Hälfte eine schräg nach unten geneigte Auflagefläche insbesondere für den Unterschenkel abgibt. Auf diese Weise können Sitzpositionen eingenommen werden, bei denen ein größerer Flächenanteil des Körpers des Passagiers unmittelbar abgestützt wird als bei üblichen Sitzpositionen in einem Economy Sitz. Dies ermöglicht eine bessere Muskelentspannung und erleichtert es dem Passagier, auf Langstreckenreisen beziehungsweise -flügen zu entspannen und beispielsweise zu schlafen. Die Erfindung hat somit erkannt, dass sich durch die erfindungsgemäße Gestaltung eines Sitzes auch bei den verhältnismäßig beengten Platzverhältnissen der Economy oder Premium Economy Class und den dabei typischen recht geringen Sitzabständen Sitzpositionen einnehmen lassen, die eine entspanntere Sitzhaltung ermöglichen.

Erfindungsgemäß ist die Beinauflage beziehungsweise Fußstütze im vorderen Bereich der Sitzstruktur schwenkbar angelenkt. Sie kann beispielsweise für Start und Landung im Wesentlichen senkrecht nach unten von der Sitzvorderkante weggeklappt werden; im Reiseflug kann dann eine oder beide längs geteilte(n) Hälfte(n) dieser Beinauflage beziehungsweise Fußstütze in das gewünschte Maß nach oben geklappt werden. Die Beinauflage beziehungsweise Fußstütze kann in eine Ruhestellung bringbar sein, in der sie eine im Wesentlichen waagerechte Auflagefläche für die Beine beziehungsweise Füße bildet. Dabei kann sie bevorzugt etwa in der gleichen Höhe wie die Sitzfläche angeordnet sein. Sie bildet in dieser Stellung eine Verlängerung der Sitzfläche nach vorne. Da die typischen Sitzabstände in der Economy oder Premium Economy es nicht gestatten, die Beine auf dieser nach vorne verlängerten Sitzfläche geradeaus zu strecken, kann dabei vom Passagier beispielsweise eine Stellung mit angezogenen Beinen eingenommen werden, in der die Füße auf dieser Beinauflage beziehungsweise Fußstütze aufgesetzt werden. Auch dies wird in der Figurenbeschreibung näher erläutert. Die Höhe der im Wesentlichen waagerechten Auflagefläche der Beinauflage beziehungsweise Fußstütze in der Ruhestellung entspricht bevorzugt - wie bereits erläutert - der Höhe der Sitzfläche und kann beispielsweise im Bereich 30 bis 60 cm, weiter vorzugsweise 40 bis 50 cm über dem Boden liegen. Der Boden ist in diesem Fall der Kabinenboden des Flugzeugs beziehungsweise des jeweiligen Verkehrsmittels.

Erfindungsgemäß kann zusätzlich der vordere Bereich der Sitzfläche höhenverstellbar ausgebildet sein. Dabei ist es möglich, dass dieser vordere Bereich der Sitzfläche beispielsweise nach oben angehoben wird und dann höher liegt als die anschließende waagerechte Auflagefläche der Beinauflage beziehungsweise Fußstütze in der Ruhestellung. Die vorne angehobene Sitzfläche bildet auf diese Weise eine verbesserte Auflagefläche für das Gesäß des Passagiers und verhindert, dass dieser in der Ruhestellung mit angezogenen Beinen zu weit nach vorne rutscht und Muskeln anspannen muss, um dieses Rutschen im Sitz zu verhindern.

Die Beinauflage ist im vorderen Bereich der Sitzstruktur schwenkbar angelenkt bzw. dort mit der Sitzstruktur verbunden, ohne jedoch mit der Sitzfläche selbst bzw. deren Vorderkante direkt kinematisch gekoppelt zu sein. Dies ermöglicht eine teilweise oder vollständig voneinander unabhängige Einstellung von Sitzfläche einerseits und Beinauflage andererseits. Bspw. lässt sich der vordere Bereich der Sitzfläche anheben und unabhängig davon Höhe und/oder Neigungswinkel der Beinauflage einstellen. Dies erleichtert das Einstellen einer entspannten Sitz/Schlafposition bei geringem Sitzabstand. Bspw. kann der vordere Bereich der Sitzfläche angehoben werden, um in einer Sitzposition mit angezogenen Knien ein nach vorne Rutschen zu unterbinden. Unabhängig davon kann die Beinauflage passend zur Beinlänge eingestellt werden.

Bevorzugt kann ein unterer Bereich der Rückenlehne in Längsrichtung verschieblich ausgebildet sein. Diese Ausgestaltung ermöglicht es, dass die Rückenlehne einem auf der Sitzfläche nach vorne rutschenden Passagier gewissermaßen nachgeführt wird und somit vollständig oder weitestgehend vollflächig den Rücken eines auf der Sitzfläche nach vorne gerückten Passagiers unterstützen kann. Zu diesem Zweck kann beispielsweise ein unterer Bereich der Rückenlehne gemeinsam mit der Sitzfläche in Längsrichtung verschieblich ausgebildet sein.

Bei einer weiteren Ausführungsform der Erfindung kann ein an Sitzfläche und Rückenlehne beziehungsweise den entsprechenden Bereichen der Tragstruktur des Sitzes befestigtes Spannpolster vorgesehen sein, das dergestalt verstellbar ist, dass es in einem ersten Zustand mit seiner Rückseite im Wesentlichen vollflächig an Sitzfläche und Rückenlehne beziehungsweise der entsprechenden Sitzstruktur anliegt und in einem zweiten Zustand in einem Teilbereich freitragend zur Anpassung an die Körperkonturen eines Passagiers ausgebildet ist. Das Spannpolster nimmt in diesem zweiten Zustand gewissermaßen eine Hängemattenfunktion ein, bei der es nur in Endbereichen mit der Sitzstruktur verbunden ist und sich in einem mittleren Bereich unter Spannung an die Körperkonturen des Passagiers anpasst. Die Bezeichnung Spannpolster soll die Tatsache ausdrücken, dass in diesem zweiten Zustand die Last eines auf diesem Spannpolster ruhenden Passagiers wenigstens teilweise von dem Polstermaterial aufgenommen und in den Endbereichen, in denen das Spannpolster an Sitzfläche beziehungsweise Rückenlehne befestigt ist, in diese Sitzfläche oder Rückenlehne beziehungsweise die entsprechende Tragstruktur des Sitzes abgeleitet wird.

Diese Ausführungsform der Erfindung ermöglicht eine besonders bequeme Ausgestaltung des Sitzes für eine Ruhe- oder Schlafstellung, bei der der Passagier im Sitz weiter nach vorne rutscht und die Beine entweder unter den Vordersitz streckt oder eine unten näher beschriebene Hockstellung einnimmt, bei der die Knie angezogen und die Füße auf der Beinauflage beziehungsweise Fußstütze abgestützt werden. Auch in dieser Stellung wird der Rücken weitgehend vollflächig unterstützt, so dass ein entspanntes Sitzen oder Schlafen möglich ist.

Zur Verstellung des Spannpolsters kann erfindungsgemäß der an der Sitzfläche beziehungsweise dem entsprechenden Bereich der Tragstruktur und/oder der an der Rückenlehne beziehungsweise dem entsprechenden Bereich der Tragstruktur befestigter Endbereich des Spannpolsters in Längsrichtung beziehungsweise in der Höhe verschieblich ausgebildet sein. Werden die Endbereiche nach hinten beziehungsweise unten verschoben, reicht die Gesamtlänge des Spannpolsters aus, um den Konturen der Sitzfläche beziehungsweise Rückenlehne zu folgen, so dass das Spannpolster mit der Rückseite im Wesentlichen vollflächig dort anliegt und einen Teil der Polsterung von Sitzfläche beziehungsweise Rückenlehne bildet.

In dem zweiten Zustand wird bevorzugt ein Mittelbereich des Spannpolsters aus dem Bereich, in dem Sitzfläche und Rückenlehne aneinander anstoßen beziehungsweise ineinander übergehen, gewissermaßen herausgezogen und überspannt diesen Bereich in der Art einer Hängematte.

Das Material des Spannpolsters ist bevorzugt hinreichend fest, um die Last eines auf dem freitragenden Bereich ruhenden Passagiers aufzunehmen und über die befestigten Endbereiche in die Tragstruktur des Sitzes abzuleiten. Das Spannpolster kann selbst eine Dicke von beispielsweise 1 bis 5 cm aufweisen, um zum einen hinreichend fest zu sein und zum anderen im ersten Zustand, in dem es mit seiner Rückseite an der Sitzstruktur anliegt, als übliches Polster dienen zu können.

Der erfindungsgemäße Sitz ist bevorzugt als Schalensitz ausgebildet. Die Bezeichnung Schalensitz bedeutet, dass eine feste Sitzschale vorhanden ist, innerhalb der Sitzfläche und Rückenlehne angeordnet sind. Die Sitzschale ist Teil der Tragstruktur oder mit der Tragstruktur des Sitzes verbunden. Beim Verstellen von Sitzfläche und/oder Rückenlehne bewegen sich diese nur innerhalb der stationären Sitzschale, die somit ihre Position nicht verändert. Schalensitze bieten somit bei einer eher engen Bestuhlung in einem Economy oder Premium Economy Bereich eines Flugzeugs die Vorteile, dass zum einen jedwedes Verstellen eines Sitzes den Fuß- beziehungsweise Knieraum für einen dahinter sitzenden Passagier unverändert lässt und zum zweiten ein etwaiges Abstützen eines Hintermanns gegen die Sitzschale des Vordersitzes von dem davor sitzenden Passagier nicht in gleicher Weise wie beispielsweise beim Abstützen gegen eine herkömmliche Rückenlehne bemerkt wird.

Erfindungsgemäß kann die Rückseite der Sitzschale eine Kniepolsterung aufweisen. Auf diese Weise ist es möglich, dass ein Passagier in einer Ruhestellung eines oder beide Knie an der Sitzschale des Vordersitzes abstützt. Durch die Ausbildung als Schalensitz wird die von den abstützenden Knien auf die Sitzschale übertragene Kraft unmittelbar in die Tragstruktur abgeleitet; insbesondere wird nicht die Rückenlehne des Sitzes unmittelbar mit dieser Kraft beaufschlagt.

Gegenstand der Erfindung ist ferner eine Sitzanordnung mit einer Mehrzahl von hintereinander angeordneten erfindungsgemäßen Sitzen. Der Sitzabstand bei einer erfindungsgemäßen Sitzanordnung beträgt bevorzugt 73 bis 115 cm, weiter vorzugsweise 81 bis 102 cm, weiter vorzugsweise 81 bis 94 cm. Es handelt sich hier um Sitzabstände, wie sie in der Economy Class oder Premium Economy Class bei kommerziellen Langstreckenflugzeugen üblich sind. Der Begriff Sitzabstand bezeichnet den im Luftfahrtbereich mit dem angelsächsischen Begriff Seat Pitch bezeichneten Abstand.

Erfindungsgemäß kann vorgesehen sein, dass die Beinauflage beziehungsweise Fußstütze in der Ruhestellung den Knieraum zwischen einem Sitz und dem davor angeordneten Sitz beziehungsweise dessen Sitzschale weitgehend ausfüllt. Es ist auf diese Weise möglich, die Füße auf diese Beinauflage beziehungsweise Fußstütze abzustützen und gleichzeitig die Knie gegen die Sitzschale des Vordersitzes abzustützen. Aufgrund der Längsteilung der Beinauflage beziehungsweise Fußstütze ist es auch möglich, dass lediglich ein Bein diese Haltung einnimmt und das andere Bein ausgestreckt unter dem Vordersitz angeordnet ist.

Ausführungsbeispiele der Erfindung werden im Folgenden anhand der Zeichnung erläutert. Darin zeigen:
- Fig. 1: Schematisch eine Ansicht eines erfindungsgemäßen Sitzes von oben;
- Fig. 2-3: schematisch eine Ausführungsform der Erfindung in einer teilweise geschnittenen Ansicht von der Seite in verschiedenen Sitzpositionen;
- Fig. 4: schematisch eine weitere Ausführungsform der Erfindung.

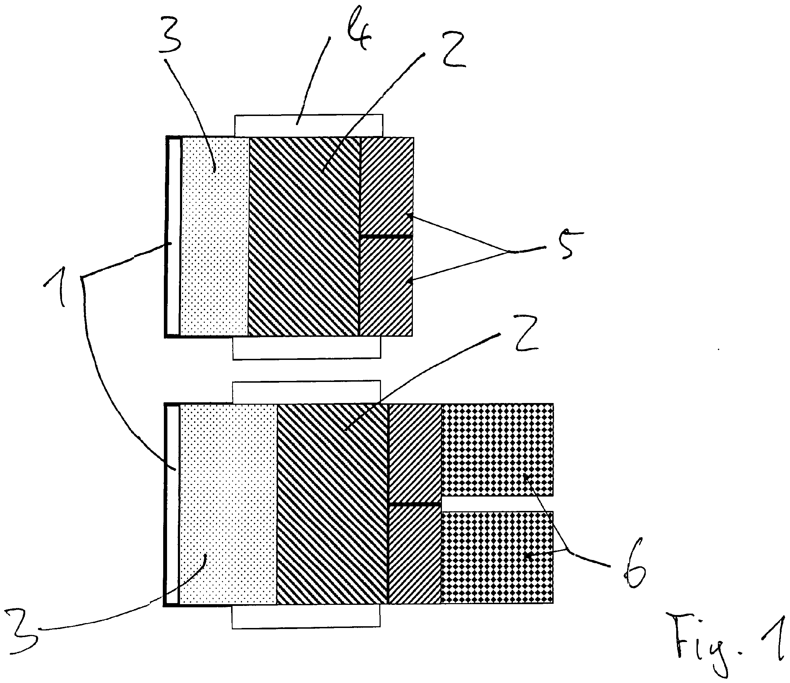

Figur 1 zeigt schematisch in einer Ansicht von oben einen Sitz mit einer festen Sitzschale 1, in der verstellbar die Sitzfläche 2 und die Rückenlehne 3 angeordnet sind. Die Armlehnen des Sitzes sind bei 4 angedeutet. Ein vorderer Bereich der Sitzfläche 2 (mit der Bezugsziffer 5 bezeichnet) ist in Längsrichtung geteilt, die beiden Hälften sind separat höhenverstellbar, wie nachfolgend noch näher erläutert werden wird.

Die obere Hälfte der Figur 1 zeigt den Sitz in einer Stellung, in der eine im Wesentlichen aufrechte Sitzposition eingenommen werden kann. Bei einem Flugzeugsitz ist dies beispielsweise die Stellung für Start und Landung.

In der unteren Hälfte der Figur 1 ist der Sitz in einer Stellung zu sehen, die beispielsweise beim Reiseflug eingestellt werden kann. Die Sitzfläche 2 ist innerhalb der Sitzschale 1 nach vorne geschoben worden, dadurch hat sich der Neigungswinkel der Rückenlehne 3, deren unterer Bereich mit der Sitzfläche 2 verbunden ist, vergrößert. Eine in Längsrichtung geteilte Beinauflage beziehungsweise Fußstütze 6 ist aus einer im Wesentlichen senkrecht nach unten weisenden Staustellung nach oben geklappt und nimmt eine Stellung ein, die das Abstützen der Beine beziehungsweise Füße ermöglicht.

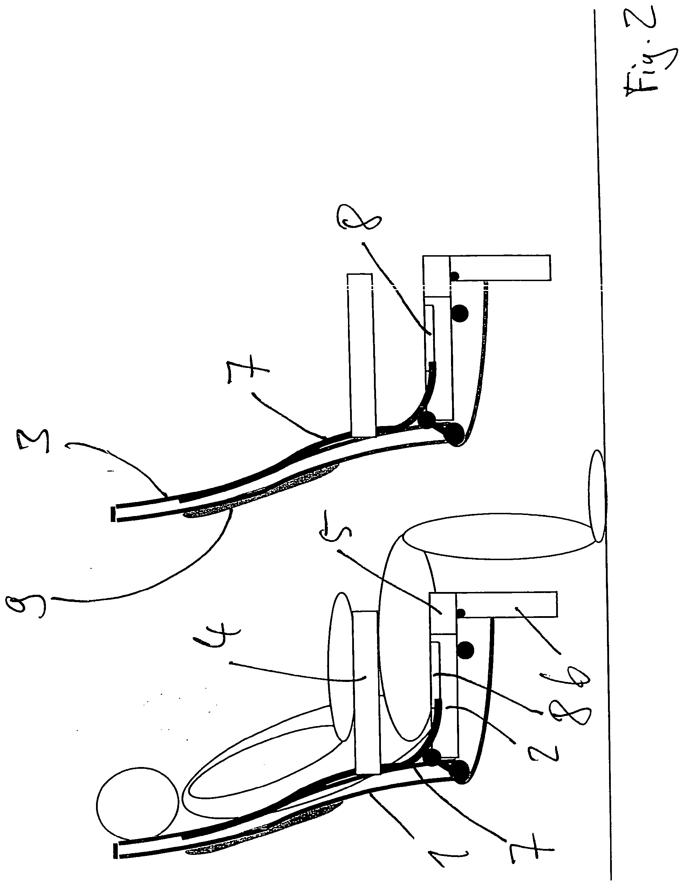

Figur 2 zeigt einen erfindungsgemäßen Sitz in einer Einstellung für eine im Wesentlichen aufrechte Sitzposition beispielsweise bei Start und Landung. In dieser Position sind die Beinauflagen beziehungsweise Fußstützen 6 im Wesentlichen senkrecht nach unten in eine Staustellung abgeklappt. Diese Ausführungsform der Erfindung weist ein mit 7 bezeichnetes Spannpolster auf, dessen oberer Endbereich an der Rückenlehne befestigt ist und dessen unterer Endbereich über eine bei 8 angedeutete Strecke auf der Sitzfläche 2 nach vorne beziehungsweise hinten verschoben werden kann.

In der in Figur 2 gezeigten Sitzstellung liegt dieses Spannpolster 7 mit seiner der Sitzstruktur zugewandten Rückseite im Wesentlichen vollflächig an der Sitzfläche 2 einerseits und der Rückenlehne 3 andererseits an. In einem rückwärtigen Bereich 9 ist die Sitzschale 1 mit einem Kniepolster versehen.

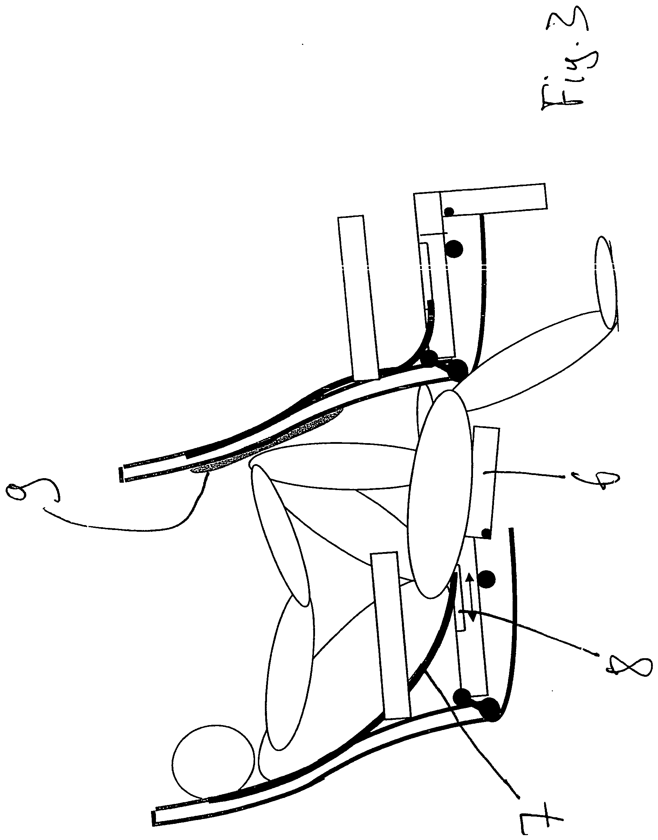

Figur 3 zeigt den Sitz in einer anderen Einstellung. Der untere Endbereich des Spannpolsters 7 ist innerhalb des Verstellweges 8 nach vorne verstellt worden, so dass der mittlere Bereich des Spannpolsters 7 nach Art einer Hängematte freitragend ist und hier den Rücken eines im Sitz nach vorne gerutschten Passagiers unterstützt. Der Passagier hat bei der in Figur 3 gezeigten Sitzstellung die linke Hälfte der Beinauflage beziehungsweise Fußstütze in eine im Wesentlichen waagerechte Stellung gebracht und nutzt diese als Fußstütze. Die rechte Hälfte der Beinauflage beziehungsweise Fußstütze 6 ist leicht aus der waagerechten Stellung nach unten geneigt eingestellt, so dass der Passagier seinen rechten Oberschenkel darauf abstützen kann und sein rechtes Bein unter dem Vordersitz streckt.

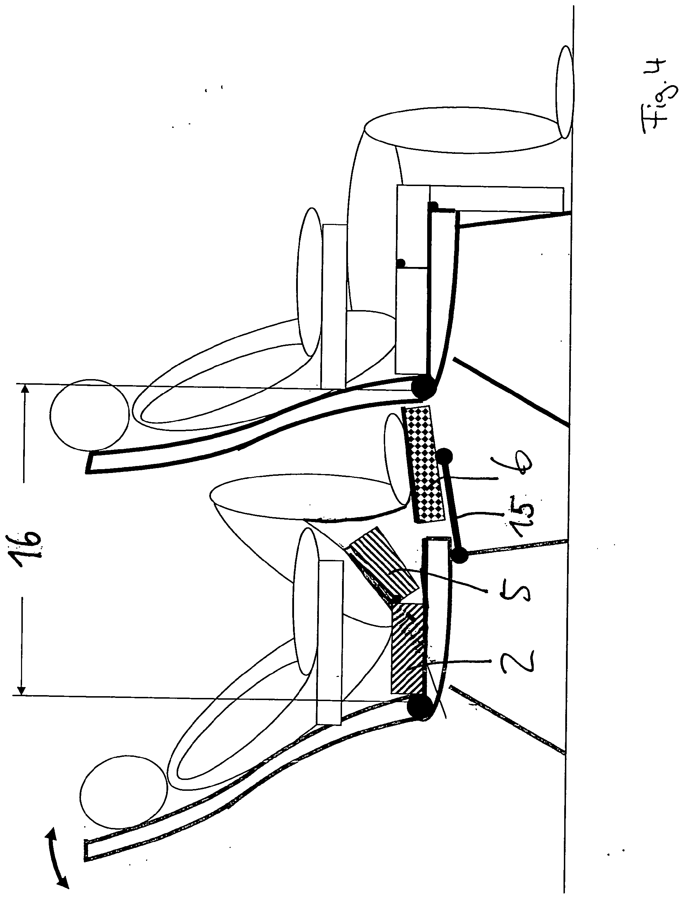

Wie in Fig. 4 gezeigt, ist die Beinauflage bzw. Fußstütze 6 mittels einer Schwenkverbindung 15 unmittelbar mit der Sitzstruktur (dem Grundgestell) verbunden und wird sich unabhängig von der Sitzfläche 2 bzw. deren vorderem Endbereich 5 verstellen. Der vordere Endbereich 5 kann die in Fig. 4 gezeigte Stellung gebracht werden, um ein Sitzen mit angezogenen Beinen bzw. Knien zu erleichtern. Unabhängig davon können mittels der Schwenkverbindung 15 Höhe und Neigungswinkel der Beinauflage 6 eingestellt werden. Auch bei geringem Sitzabstand (Saet Pitch) 16 kann eine bequeme Sitzposition eingestellt werden.

In Figur 4, ist eine Sitzstellung gezeigt, bei der die Beinauflage beziehungsweise Fußstütze 6 in der gezeigten Ruhestellung den Knieraum zwischen Sitz und dem davor angeordneten Sitz weitgehend ausfüllt. "Weitgehend ausfüllen" bedeutet in diesem Zusammenhang, dass wenigstens 60%, vorzugsweise wenigstens 70, 80 beziehungsweise 90% des Abstandes in Längsrichtung zwischen der Sitzflächenvorderkante und der Sitzschale oder Rückenlehne des davor angeordneten Sitzes von der hochgeklappten Beinauflage beziehungsweise Fußstütze eingenommen werden.

## Patentansprüche

1. Sitz für ein Verkehrsmittel, mit einer Sitzstruktur in Form eines Grundgestells, einer Sitzfläche (2), einer Rückenlehne (3) und einer im Bereich vor der Sitzfläche angeordneten verstellbaren Beinauflage bzw. Fußstütze (6), die in Längsrichtung geteilt ausgebildet ist, wobei die beiden Teile separat verstellbar ausgebildet sind, **dadurch gekennzeichnet, dass** die Beinauflage bzw. Fußstütze (6) im vorderen Bereich der Sitzstruktur schwenkbar angelenkt ist, ohne mit der Sitzfläche (2) kinematisch gekoppelt zu sein, so dass Sitzfläche (2) und Beinauflage bzw. Fußstütze (6) unabhängig voneinander verstellbar sind.

2. Sitz nach Anspruch 1, **dadurch gekennzeichnet, dass** die Beinauflage bzw. Fußstütze (6) in eine Ruhestellung bringbar ist, in der sie eine im wesentlichen waagerechte Auflagefläche für die Beine bzw. Füße bildet.

3. Sitz nach Anspruch 2, **dadurch gekennzeichnet, dass** die im Wesentlichen waagerechte Auflagefläche der Beinauflage bzw. Fußstütze (6) in der Ruhestellung etwa in der gleichen Höhe wie die Sitzfläche (2) angeordnet ist.

4. Sitz nach Anspruch 2 oder 3, **dadurch gekennzeichnet, dass** die im Wesentlichen waagerechte Auflagefläche der Beinauflage bzw. Fußstütze (6) in der Ruhestellung eine Höhe von 30 bis 60 cm, vorzugsweise 40 bis 50 cm über dem Boden aufweist.

5. Sitz nach einem der Ansprüche 1 bis 4, **dadurch gekennzeichnet, dass** zusätzlich der vordere Bereich (5) der Sitzfläche (2) höhenverstellbar ausgebildet ist.

6. Sitz nach einem der Ansprüche 1 bis 5, **dadurch gekennzeichnet, dass** ein unterer Bereich der Rückenlehne (3) in Längsrichtung verschieblich ausgebildet ist.

7. Sitz nach Anspruch 6, **dadurch gekennzeichnet, dass** ein unterer Bereich der Rückenlehne (3) gemeinsam mit der Sitzfläche (7) in Längsrichtung verschieblich ausgebildet ist.

8. Sitz nach einem der Ansprüche 1 bis 7, **dadurch gekennzeichnet, dass** ein an Sitzfläche (2) und Rückenlehne (3) befestigtes Spannpolster (7) vorgesehen ist, wobei dieses Spannpolster (7) dergestalt verstellbar ist, dass es in einem ersten Zustand mit seiner Rückseite im wesentlichen vollflächig an der Sitzstruktur anliegt und in einem zweiten Zustand in einem Teilbereich freitragend zur Anpassung an die Körperkonturen eines Passagiers ausgebildet ist.

9. Sitz nach Anspruch 8, **dadurch gekennzeichnet, dass** der an der Sitzfläche befestigte Endbereich des Spannpolsters (7) in Längsrichtung verschieblich ausgebildet ist.

10. Sitz nach Anspruch 8 oder 9, **dadurch gekennzeichnet, dass** der an der Rückenlehne befestigte Endbereich des Spannpolsters (7) in der Höhe verschieblich ausgebildet ist.

11. Sitz nach einem der Ansprüche 1 bis 10, **dadurch gekennzeichnet, dass** er als Schalensitz ausgebildet ist.

12. Sitz nach Anspruch 11, **dadurch gekennzeichnet, dass** die Rückseite der Sitzschale (1) eine Kniepolsterung (9) aufweist.

13. Sitzanordnung, **dadurch gekennzeichnet, dass** sie eine Mehrzahl von hintereinander angeordneten Sitzen nach einem der Ansprüche 1 bis 12 aufweist.

14. Sitzanordnung nach Anspruch 13, **dadurch gekennzeichnet, dass** der Sitzabstand 73 bis 115 cm, vorzugsweise 81 bis 102 cm, weiter vorzugsweise 81 bis 94 cm beträgt.

15. Sitzanordnung nach Anspruch 13 oder 14, **dadurch gekennzeichnet, dass** die Beinauflage bzw. Fußstütze (6) in einer Ruhestellung den Knieraum zwischen einem Sitz und dem davor angeordneten Sitz weitgehend ausfüllt.

## Claims

1. Seat for a means of transport comprising a seat structure in the form of a base frame, a seat surface (2), a backrest (3) and an adjustable leg support and/or foot support (6) arranged in the region in front of the seat surface, which leg support and/or foot support is configured to be divided in the longitudinal direction, wherein the two parts are configured to be adjustable separately, **characterized in that** the leg support and/or foot support (6) is pivotably articulated in the front region of the seat structure, without having to be kinematically coupled to the seat surface (2) so that seat surface (2) and leg support and/or foot support (6) can be adjusted independently of one another.

2. Seat according to Claim 1, **characterized in that** the leg support and/or foot support (6) may be moved into a resting position, in which it forms a substantially horizontal support surface for the legs and/or feet.

3. Seat according to Claim 2, **characterized in that** the substantially horizontal support surface of the leg support and/or foot support (6) in the resting position is arranged approximately at the same height as the seat surface (2).

4. Seat according to Claim 2 or 3, **characterized in that** the substantially horizontal support surface of the leg support and/or foot support (6) in the resting position has a height of 30 to 60 cm, preferably 40 to 50 cm above the floor.

5. Seat according to one of Claims 1 to 4, **characterized in that** additionally the front region (5) of the seat surface (2) is configured to be height-adjustable.

6. Seat according to one of Claims 1 to 5, **characterized in that** a lower region of the backrest (3) is configured to be displaceable in the longitudinal direction.

7. Seat according to Claim 6, **characterized in that** a lower region of the backrest (3), together with the seat surface (7), is configured to be displaceable in the longitudinal direction.

8. Seat according to one of Claims 1 to 7, **characterized in that** adjustable padding (7) is provided fastened to the seat surface (2) and backrest (3), said adjustable padding (7) being adjustable such that in a first state with its rear face it bears substantially over the entire surface against the seat structure, and in a second state is configured in a partial region to be unsupported for adapting to the body contours of a passenger.

9. Seat according to Claim 8, **characterized in that** the end region of the adjustable padding (7) fastened to the seat surface is configured to be displaceable in the longitudinal direction.

10. Seat according to Claim 8 or 9, **characterized in that** the end region of the adjustable padding (7) fastened to the backrest is configured to be displaceable vertically.

11. Seat according to one of Claims 1 to 10, **characterized in that** it is configured as a shell-type seat.

12. Seat according to Claim 11, **characterized in that** the rear face of the seat shell (1) has a knee pad (9).

13. Seat arrangement **characterized in that** it has a plurality of seats arranged behind one another according to one of Claims 1 to 12.

14. Seat arrangement according to Claim 13, **characterized in that** the seat pitch is 73 to 115 cm, preferably 81 to 102 cm, further preferably 81 to 94 cm.

15. Seat arrangement according to Claim 13 or 14, **characterized in that** the leg support and/or foot support (6) in a resting position substantially occupies the knee room between a seat and the seat arranged in front thereof.

## Revendications

1. Siège pour un moyen de transport, comprenant une structure de siège sous la forme d'un cadre de base, une surface d'assise (2), un dossier (3) et un repose-jambes ou repose-pieds (6) réglable disposé dans la zone à l'avant de la surface d'assise, lequel est réalisé de manière divisée dans la direction longitudinale, les deux parties étant réalisées de manière réglable séparément, **caractérisé en ce que** le repose-jambes ou repose-pieds (6) est articulé de manière pivotante dans la zone avant de la structure de siège sans être accouplé de manière cinématique à la surface d'assise (2), de telle sorte que la surface d'assise (2) et le repose-jambes ou repose-pieds (6) soient réglables indépendamment l'un de l'autre.

2. Siège selon la revendication 1, **caractérisé en ce que** le repose-jambes ou repose-pieds (6) peut être amené à une position de repos dans laquelle il forme une surface d'appui sensiblement horizontale pour les jambes ou les pieds.

3. Siège selon la revendication 2, **caractérisé en ce que** la surface d'appui sensiblement horizontale du repose-jambes ou repose-pieds (6) est, dans la position de repos, disposée sensiblement à la même hauteur que la surface d'assise (2).

4. Siège selon la revendication 2 ou 3, **caractérisé en ce que** la surface d'appui sensiblement horizontale du repose-jambes ou repose-pieds (6) présente, dans la position de repos, une hauteur de 30 à 60 cm, de préférence de 40 à 50 cm, au-dessus du sol.

5. Siège selon l'une quelconque des revendications 1 à 4, **caractérisé en ce qu'**en outre la zone avant (5) de la surface d'assise (2) est réalisée de manière réglable en hauteur.

6. Siège selon l'une quelconque des revendications 1 à 5, **caractérisé en ce qu'**une zone inférieure du dossier (3) est réalisée de manière déplaçable dans la direction longitudinale.

7. Siège selon la revendication 6, **caractérisé en ce qu'**une zone inférieure du dossier (3) est réalisée de manière déplaçable conjointement avec la surface d'assise (7) dans la direction longitudinale.

8. Siège selon l'une quelconque des revendications 1 à 7, **caractérisé en ce qu'**un rembourrage tendu (7) fixé à la surface d'assise (2) et au dossier (3) est prévu, ce rembourrage tendu (7) étant réglable de telle sorte que, dans un premier état, il s'appuie par son côté arrière, sensiblement sur toute sa surface, contre la structure de siège et, dans un deuxième état, il soit réalisé de manière autoporteuse dans une zone partielle pour s'adapter aux contours du corps d'un passager.

9. Siège selon la revendication 8, **caractérisé en ce que** la zone d'extrémité, fixée à la surface d'assise, du rembourrage tendu (7) est réalisée de manière déplaçable dans la direction longitudinale.

10. Siège selon la revendication 8 ou 9, **caractérisé en ce que** la zone d'extrémité, fixée au dossier, du rembourrage tendu (7) est réalisée de manière déplaçable en hauteur.

11. Siège selon l'une quelconque des revendications 1 à 10, **caractérisé en ce qu'**il est réalisé sous forme de siège-baquet.

12. Siège selon la revendication 11, **caractérisé en ce que** le côté arrière du siège-baquet (1) comprend un rembourrage pour les genoux (9).

13. Ensemble de sièges, **caractérisé en ce qu'**il comprend une pluralité de sièges, disposés les uns derrière les autres, selon l'une quelconque des revendications 1 à 12.

14. Ensemble de sièges selon la revendication 13, **caractérisé en ce que** l'écartement des sièges est de 73 à 115 cm, de préférence de 81 à 102 cm, de préférence encore de 81 à 94 cm.

15. Ensemble de sièges selon la revendication 13 ou 14, **caractérisé en ce que** le repose-jambes ou repose-pieds (6) remplit dans une large mesure, dans une position de repos, l'espace pour les genoux entre un siège et le siège disposé devant celui-ci.
